# EUROPEAN PATENT SPECIFICATION

(11) **EP 0 783 457 B1**
(45) Date of publication and mention of the grant of the patent: **18.04.2001**
(21) Application number: 96926351.6
(22) Date of filing: 09.07.1996
(51) Int. Cl.: C01B 39/04, C01B 37/02, C01B 39/48, C01B 39/30, B01J 29/06, B01J 29/035, B01J 29/70, B01J 29/50

(54) **ZEOLITES AND PROCESSES FOR THEIR MANUFACTURE**
ZEOLITHE UND VERFAHREN ZU DEREN HERSTELLUNG
ZEOLITHES ET LEURS PROCEDES DE FABRICATION

(30) Priority: 10.07.1995 EP 95304801
(43) Date of publication of application: 16.07.1997
(73) Proprietor: EXXON CHEMICAL PATENTS INC., Linden, New Jersey 07036-0710 (US)
(72) Inventor: VERDUIJN, Johannes, Petrus, B-3061 Leefdaal (BE)
(74) Representative: White, Nicholas John, Dr.
(86) International application number: EP9603098
(87) International publication number: WO9703019

(56) References cited:
- EP-A- 0 130 809
- WO-A-93/08125
- US-A- 3 578 398
- US-A- 4 061 724

## Description

This invention relates to zeolites, and to processes for their manufacture. More especially, it relates to the manufacture of colloidal zeolites, i.e., zeolites with a particle size of at most about 100 nm.

In International Application WO 93/08125, there is described a process for the manufacture of colloidal zeolites. In this process, a boiling aqueous synthesis mixture is prepared, the mixture comprising a source of silica and a basic organic structure directing agent in a proportion sufficient to cause substantially complete dissolution of the silica source. The synthesis mixture is then maintained at an elevated temperature, but at 120°C or lower, for a time sufficient to cause crystals of the desired zeolite, which may, for example, be an MFI, MEL or ^{*}BEA zeolite, to form. The synthesis mixture may also comprise sources of other zeolite components, most importantly of aluminium and an alkali metal. It is stated to be an essential feature that the silica is dissolved in the synthesis mixture at the boiling temperature, this being achieved by the organic base that is also the structure directing agent or template together with an inorganic base, e.g, sodium hydroxide.

Products of particle size at most 100 nm have advantages over larger particle size products, for example, when used as a catalyst, e.g., in hydrocarbon conversions, they have an enhanced ratio of surface area to mass, high diffusion rates, reactivities and resistance to deactivation by pore plugging and surface contamination. Similarly, they have advantages in organic separations, and are also valuable in the manufacture of supported layers, especially membranes, as described in WO 94/25151, the disclosure of which is incorporated by reference herein. In certain of the procedures described in that International application, the zeolite layer is deposited from a colloidal suspension onto a support; instability in the suspension is deleterious. Accordingly, it would be desirable to have a wider range of processes by which various zeolites capable of forming a stable suspension might be manufactured, and for this purpose a particle size of at most 100 nm is desirable.

It has now surprisingly been found that even in the absence of the inorganic base, or in the presence of insufficient inorganic base to effect complete dissolution of the silica source in the boiling synthesis mixture, colloidal zeolite crystals may be obtained. The procedure allows the formation of a colloidal zeolite suspension with an enhanced zeolite content.

The present invention accordingly provides a process for preparing a zeolite having a particle size of at most 100 nm, which comprises preparing an aqueous synthesis mixture comprising a source of silicon and a basic organic structure directing agent in a synthesis mixture insufficiently alkaline to cause substantially complete dissolution of the silica or in a synthesis mixture containing another reactant essential to the formation of the zeolite which reactant inhibits dissolution of the silica, and hydrothermally treating the synthesis mixture at a temperature below 120°C for a time sufficient to effect formation of the zeolite.

The process is applicable to any zeolite which may be prepared using a source of silica and an organic structure directing agent, for example, MFI, MEL, ^{*}BEA or OFF, e.g., ZSM-5 and other high silica MFI zeolites.

The structure directing agent may be, for example, the hydroxide or a salt of tetramethylammonium (TMA), tetraethylammonium (TEA), triethylmethylammonium (TEMA), tetrapropylammonium (TPA), tetrabutylammonium (TBA), tetrabutylphosphonium (TBP), trimethylbenzylammonium (TMBA), trimethylcetylammonium (TMCA), trimethylneopentylammonium (TMNA), triphenylbenzylphosphonium (TPBP), bispyrrolidinium (BP), ethylpyridinium (EP), diethylpiperidinium (DEPP) or a substituted azoniabicyclooctane, e.g., methyl or ethyl substituted quinuclidine or 1,4-diazoniabicyclo(2,2,2)octane.

Preferred structure directing agents are the hydroxides of TMA, TEA, TPA and TBA.

Advantageously, the synthesis mixture contains an excess of organic structure directing agent over that necessary to provide template for all the zeolite formed, that is to say, more than previously described in prior art procedures for preparing the same zeolite.

The zeolite produced by the process of the invention is primarily a silicate or an aluminosilicate, and will be described herein as such. It is, however, within the scope of the invention to replace aluminium wholly or partly with gallium, and partly with boron, iron or other trivalent elements, and silicon may similarly be replaced by germanium or phosphorus. It is also within the scope of the invention to include inorganic cations, for example, potassium or sodium, in the synthesis mixture. For MFI, MEL and ^{*}BEA, it is preferred not to add such inorganic cations.

The sources of the various elements required in the final product may be any of those in commercial use or described in the literature, as may the preparation of the synthesis mixture.

For example, the source of silicon may be, for example, silica or silicic acid powder, a silicate, e.g., an alkali metal silicate, or a tetraalkyl orthosilicate.

The source of aluminium if present may be, for example, aluminium metal, e.g., in the form of chips, hydrated alumina, a water-soluble aluminium salt, e.g., aluminium sulphate, or an alkoxide, e.g., aluminium isopropoxide. It has been observed that, while in a synthesis mixture that does not contain certain components, e.g., aluminium or gallium sources, a given quantity of alkali is sufficient to dissolve a given quantity of silica, that quantity of silica will not dissolve in the alkali in the presence of such components. In certain cases, no reasonable quantity of alkali will dissolve the silica in their presence.

Accordingly, while such components are essential for making the zeolite in question, they create processing difficulties by their presence; these difficulties are circumvented by the process of the present invention.

The alkali metal ion source if present is advantageously sodium or potassium hydroxide.

The crystal size may be varied by varying the crystallization temperature, the lower the temperature the smaller the particle size. Advantageously, the temperature is within the range of from 40°C to 97°C, more advantageously from 40°C to 95°C. Temperatures within the range of 45°C to 85°C are preferred. For zeolites containing a source of alumina, the particle size may also be varied by varying the amount of alumina present. However, the effect of varying the amount of alumina varies from zeolite to zeolite. For example, it appears that increasing the alumina content of a synthesis mixture for an MFI-type zeolite results in an increase in crystal size. On the other hand, increasing the alumina content of a synthesis mixture for producing a zeolite ^{*}BEA results in a decrease in crystal size. Thus for a particular composition of synthesis mixture, i.e. one containing specified amounts of synthesis ingredients, the particle size may be selected quite accurately by selecting an appropriate crystallization temperature.

Hydrothermal treatment may take place for several hours to several weeks.

The second aspect of the present invention is based on the observation that if the concentration of inorganic cations, especially potassium, in the synthesis mixture is reduced from that typically previously used in Offretite synthesis a colloidal suspension of Offretite may be obtained. It has also been found that it is not in fact essential for the synthesis mixture to be clear and homogeneous, as previously suggested, e.g., in WO 93/08125, in connexion with, e.g., MFI production, as necessary for colloidal zeolite production. WO 94/05597 also indicates that though a clear synthesis mixture is a necessary condition for the manufacture of colloidal zeolites it is not a sufficient one. Surprisingly, a mixture in which, for example, the source of silicon is incompletely dissolved, is capable of yielding uniform colloidal-size Offretite crystals.

The present invention accordingly also provides a process for the manufacture of a colloidal suspension of Offretite, wherein a synthesis mixture having a molar composition, when calculated in terms of oxides, in the following ranges:

| | |
|---|---|
| K₂O:Al₂O₃ | 0.25 to 0.5:1 |
| (TMA)₂O:Al₂O₃ | at least 2.0:1 |
| SiO₂:Al₂O₃ | 8 to 10:1 |
| H₂O:Al₂O₃ | 80 to 100:1 |

wherein TMA represents the tetramethylammonium cation, is subjected to hydrothermal treatment at a temperature and for a time sufficient to form a colloidal suspension of Offretite.

The process of the invention provides individual crystals or agglomerates, and the suspension produced directly, or by washing, is a stable one. The products of the invention have utility as seeds, or as catalysts, catalyst supports and sorbents, either in layer or particulate form, if desired or required after washing, cation exchange, and/or calcining, in organic reactions and separations. The following examples illustrate the invention:

### Example 1

Silicic acid powder was mixed with an aqueous TPAOH solution (20 wt% in water) and heated. The molar composition of the resulting synthesis mixture was:

1.52 (TPA)₂O:10 SiO₂:142 H₂O

The synthesis mixture was hazy, and was separated into a clear liquid and solid by centrifuging for 20 minutes at 3500 rpm. The clear liquid was decanted through a 0.45 *µ*m filter into a plastic beaker. The whitish gel-like mass remaining on the bottom of the centrifuge vessel was transferred to another plastic beaker, and both beakers were placed in an oil bath at 80°C. After 24 hours, the appearance of the clear liquid had changed from water white to bluish, indicating zeolite formation; the beaker was removed from the oil bath. The appearance of the gel had not changed after 24 hours but after 4.5 days it was observed that the original gelly mass showed colloidal appearance and the gelly character had totally disappeared; this beaker was then removed from the oil bath.

The slurries from the two beakers were each washed with water to pH 10 and dried for several hours at 105°C. X-ray diffraction (XRD) showed that both products were excellently crystalline MFI while scanning electron microscopy (SEM) showed that both products had a mean crystallite size of 60 nm.

### Example 2

111.14 g of 20 wt% TPAOH in water (Fluka) were placed in the bowl of a mixer and 59.22 g of silicic acid powder (Akzo SM 604) were slowly added portion-wise with stirring. After the last portion of silica was added a whitish mass with a viscosity like that of heavy syrup resulted. The molar composition was

0.62 (TPA)₂O:10 SiO₂:60 H₂O

the molar ratio of TPAOH/SiO₂ being about 0.12.

The synthesis mixture was transferred to a 250 ml plastic flask, which was placed in an oil bath at 50°C with the flask connected to a reflux condenser. The appearance of the synthesis mixture was monitored. For 25 days' heating no change was observed, whereas after 27 days a bluish hue appeared and the viscosity changed from that of heavy syrup to water-like. The observation showed that although at this temperature the onset of crystallization is delayed crystallization is rapid once it starts.

The product was washed to a pH of 10.6, and a portion of the washed slurry evaporated to dryness in a 120°C oven, it being calculated that the solids content of the slurry was 26.6%. The dried product was calcined for 18 hours at 500°C, with a weight loss of 13.3%. From this result, it appeared that the yield on silica was 91%. The washed slurry was allowed to stand for 8 days, no sedimentation being observed after this period.

XRD showed an excellently crystalline MFI product while SEM showed that the solids consisted of spherical particles with a diameter of about 80 nm.

In a comparative experiment, a substantially identical synthesis mixture was placed in an autoclave and maintained at 120°C for 96 hours. The product was also pure MFI, but consisted of spherical particles of 700 nm diameter.

### Example 3

Colloidal Offretite of particle size below 50 nm was prepared from a synthesis mixture containing the following components:

| | Parts by Weight |
|---|---|
| TMAOH, 25% by weight in water (Fluka) | 108.52 |
| Al chips, 99.99% wt purity (Fluka) | 2.8924 |
| SiO₂ powder, 89.8% wt, 10.2% water (Baker) | 35.52 |

(It is believed that a small proportion of KOH was present as contaminant in the TMAOH.)

The Al chips were dissolved in the TMAOH solution with stirring and gentle heat. After addition of the silica powder, the mixture was heated to boiling with stirring and kept at boiling point for 5 minutes. It was apparent that not all the silica had dissolved, some settling on the base of the glass beaker. The molar composition of the synthesis mixture was:

2.78 (TMA)₂O:0.47 K₂O:Al₂O₃:9.90 SiO₂:91 H₂O

The synthesis mixture was homogenized by vigorous stirring for several minutes, then immediately poured into a plastic bottle which was placed in an oil bath, the open end of the bottle being connected to a reflux condenser. The oil bath was heated to 85°C, and maintained at that temperature over a period. The appearance of the mixture gradually changed, with the quantity of deposited silica reducing, while the mixture developed into a transparent jelly. Heating was terminated after 160 hours.

After washing using a 17500 rpm centrifuge, the product was suspended in the last wash water, a stable, colloidal, suspension resulting. A portion was evaporated to dryness and characterized by XRD and SEM. Although the diffractogram showed weak and broad peaks, the pattern was still recognizable as pure Offretite.

The SEM showed that the product consisted of uniformly sized and shaped particles, about 45 nm x 20 nm. XRD analysis of a portion of product calcined in air at 475°C for 20 hours showed essentially no change in crystallinity, evidence of thermal stability.

## Claims

1. A process for preparing a zeolite having a particle size of at most 100 nm, which comprises preparing an aqueous synthesis mixture comprising a source of silicon and a basic organic structure directing agent in a synthesis mixture insufficiently alkaline to cause substantially complete dissolution of the silicon source in the synthesis mixture or containing another reactant essential to the formation of the zeolite which reactant inhibits disssolution of the silica, and hydrothermally treating the synthesis mixture at a temperature below 120°C for a time sufficient to effect formation of the zeolite.

2. A process as claimed in claim 1, wherein the structure directing agent is tetramethylammonium, tetraethylammonium, tetrapropylammonium, or tetrabutylammonium, hydroxide.

3. A process as claimed in claim 1, wherein the zeolite is an MFI, MEL, ^{*}BEA, or OFF zeolite.

4. A process as claimed in any one of claims 1 to 3, wherein the synthesis mixture also contains an inorganic base.

5. A process as claimed in claim 4, wherein the base is potassium hydroxide.

6. A process as claimed in any one of claims 1 to 5, wherein the hydrothermal treatment is carried out at a temperature within the range of 40°C to 97°C.

7. A process for the manufacture of a colloidal suspension of Offretite, wherein a synthesis mixture having a molar composition, when calculated in terms of oxides, in the following ranges:
| | |
|---|---|
| K₂O:Al₂O₃ | 0.25 to 0.5:1 |
| | |
| (TMA)₂O:Al₂O₃ | at least 2.0:1 |
| | |
| SiO₂:Al₂O₃ | 8 to 10:1 |
| | |
| H₂O:Al₂O₃ | 80 to 100:1 |
wherein TMA represents the tetramethylammonium cation, is subjected to hydrothermal treatment at a temperature and for a time sufficient to form a colloidal suspension of Offretite.

8. A colloidal zeolite capable of forming a stable suspension or a stable colloidal zeolite suspension, obtainable by the process of claim 7.

9. The use of the product claimed in claim 8, if desired or required after washing, ion exchange, or calcining, in particulate or layer form, in hydrocarbon separations, conversions, or adsorptions

## Patentansprüche

1. Verfahren zur Herstellung eines Zeolithen mit einer Teilchengröße von höchstens 100 nm, bei dem eine wässrige Synthesemischung hergestellt wird, die eine Quelle für Silicium und ein basisches organisches Struktursteuerungsmittel in einer Synthesemischung umfasst, die nicht ausreichend alkalisch ist, um eine im wesentlichen vollständige Auflösung der Siliciumquelle in der Synthesemischung herbeizuführen oder die einen anderen Reaktanten enthält, der für die Bildung des Zeolithen wesentlich ist und der die Auflösung des Siliciumdioxids hemmt, und die Synthesemischung bei einer Temperatur unter 120°C für eine Zeitdauer hydrothermal behandelt wird, die ausreicht, um die Bildung des Zeolithen zu bewirken.

2. Verfahren nach Anspruch 1, bei dem das Struktursteuerungsmittel Tetramethylammonium-, Tetraethylammonium-, Tetrapropylammonium- oder Tetrabutylammoniumhydroxid ist.

3. Verfahren nach Anspruch 1, bei dem der Zeolith ein MFI-, MEL-, ^{*}BEA- oder OFF-Zeolith ist.

4. Verfahren nach einem der Ansprüche 1 bis 3, bei dem die Synthesemischung auch anorganische Base enthält.

5. Verfahren nach Anspruch 4, bei dem die Base Kaliumhydroxid ist.

6. Verfahren nach einem der Ansprüche 1 bis 5, bei dem die Hydrothermalbehandlung bei einer Temperatur im Bereich von 40°C bis 97°C durchgeführt wird.

7. Verfahren zur Herstellung einer kolloidalen Suspension von Offretit, bei dem eine Synthesemischung mit einer molaren Zusammensetzung, berechnet als Oxide, in den folgenden Bereichen
| | |
|---|---|
| K₂O:Al₂O₃ | 0,25 bis 0,5:1 |
| (TMA)₂O:Al₂O₃ | mindestens 2,0:1 |
| SiO₂:Al₂O₃ | 8 bis 10:1 |
| H₂O:Al₂O₃ | 80 bis 100:1 |
wobei TMA das Tetramethylammoniumkation bedeutet, Hydrothermalbehandlung bei einer Temperatur und für eine Zeitdauer ausgesetzt wird, die ausreichen, um eine kolloidale Suspension von Offretit zu bilden.

8. Kolloidaler Zeolith, der eine stabile Suspension oder eine stabile kolloidale Zeolithsuspension bilden kann und nach dem Verfahren gemäß Anspruch 7 erhältlich ist.

9. Verwendung des Produkts nach Anspruch 8, falls wünschenswert oder erforderlich nach Waschen, Ionenaustausch oder Calcinierung, in Teilchen- oder Schichtform in Kohlenwasserstofftrennungen, -umwandlungen oder -adsorptionen.

## Revendications

1. Procédé pour la préparation d'une zéolite ayant un diamètre de particule d'au plus 100 nm, qui comprend la préparation d'un mélange aqueux de synthèse comprenant une source de silicium et un agent organique basique dirigeant la structure dans un mélange de synthèse insuffisamment alcalin pour provoquer la dissolution pratiquement totale de la source de silicium dans le mélange de synthèse ou contenant un autre corps réactionnel essentiel à la formation de la zéolite, corps réactionnel qui inhibe la dissolution de la silice, et le traitement hydrothermique du mélange de synthèse à une température inférieure à 120 °C pendant un temps suffisant pour provoquer la formation de la zéolite.

2. Procédé suivant la revendication 1, dans lequel l'agent dirigeant la structure est l'hydroxyde de tétraméthylammonium, de tétraéthylammonium, de tétrapropylammonium ou de tétrabutylammonium.

3. Procédé suivant la revendication 1, dans lequel la zéolite est une zéolite MFI, MEL, ^{*}BEA ou OFF.

4. Procédé suivant l'une quelconque des revendications 1 à 3, dans lequel le mélange de synthèse contient également une base inorganique.

5. Procédé suivant la revendication 4, dans lequel la base consiste en hydroxyde de potassium.

6. Procédé suivant l'une quelconque des revendications 1 à 5, dans lequel le traitement hydrothermique est effectué à une température comprise dans l'intervalle de 40°C à 97°C.

7. Procédé pour la production d'une suspension colloïdale d'offretite, dans lequel un mélange de synthèse ayant une composition molaire, lors du calcul en terme d'oxydes, dans les intervalles suivants :
| | |
|---|---|
| K₂O:Al₂O₃ | 0,25 à 0,5:1 |
| (TMA)₂O:Al₂O₃ | au moins 2,0:1 |
| SiO₂:Al₂O₃ | 8 à 10:1 |
| H₂O:Al₂O₃ | 80 à 100:1 |
dans lesquels TMA représente le cation tétraméthylammonium, est soumis à un traitement hydrothermique à une température et pendant un temps suffisants pour la formation d'une suspension colloïdale d'offretite.

8. Zéolite colloïdale capable de former une suspension stable, ou bien suspension de zéolite colloïdale stable, pouvant être obtenue par le procédé suivant la revendication 7.

9. Utilisation du produit suivant la revendication 8, si cela est désiré ou requis après lavage, échange d'ions ou calcination, sous forme de particules ou de couche, dans des séparations, conversions ou adsorptions d'hydrocarbures.
